# EUROPEAN PATENT APPLICATION

(11) **EP 1 615 291 A1**
(43) Date of publication of application: **11.01.2006**
(21) Application number: 04725543.5
(22) Date of filing: 02.04.2004
(51) Int. Cl.: H01Q 3/26

(54) **ARRAY ANTENNA TRANSMITTER/RECEIVER**

(30) Priority: 15.04.2003 JP 2003110640
(71) Applicant: MATSUSHITA ELECTRIC INDUSTRIAL CO., LTD., Kadoma-shi, Osaka 571-8501 (JP)
(72) Inventor: IZUMI, Takashi, Kanazawa-shi, Ishikawa 920-0865 (JP); IKEDA, Kazuhiko, Matto-shi, Isikawa 924-0068 (JP); ENOKI, Takashi, Yokohama-shi, Kanagawa 233-0006 (JP); SASAKI, Makoto, Yokohama-shi, Kanagawa 233-0012 (JP)
(74) Representative: Grünecker, Kinkeldey, Stockmair & Schwanhäusser Anwaltssozietät
(86) International application number: PCT/JP2004/004868
(87) International publication number: WO 2004/093247

(57) **Abstract**

An array antenna transmission and reception apparatus that is simply configured to make it possible to reduce the size and weight and that separates and extracts respective phase calibration signals from radio signals to be transmitted and radio signals to be received passing through the same path. A directivity coupler (102) is provided with a first connection terminal (201) connected to an antenna element (101), a second connection terminal (202) connected to an antenna duplexer (103), a third connection terminal (203) with directivity toward the first connection terminal (201) and connected to a phase calibration received signal conversion section (111) and a fourth connection terminal (204) with directivity toward the second connection terminal (202) and connected to a phase calibration transmission signal conversion section (110). The antenna duplexer (103) is connected to the directivity coupler (102), a transmission radio section (104) and a reception radio section (105), outputs a radio signal output from the transmission radio section (104) to the directivity coupler (102) and outputs a radio signal output from the directivity coupler (102) to the reception radio section (105).

## Description

### Technical Field

The present invention relates to a radio signal transmission and reception apparatus provided with an array antenna.

### Background Art

A transmission and reception apparatus provided with an adaptive array antenna which adaptively changes antenna directivity by electrically combining transmission and reception outputs of a plurality of antenna elements is conventionally known (e.g., see Unexamined Japanese Patent Publication No.HEI 9-219615).

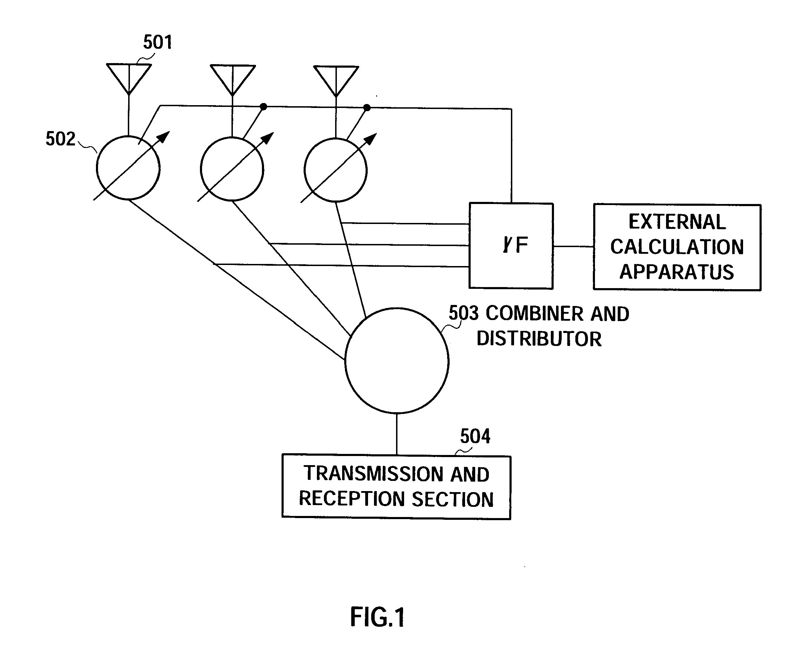

FIG.1 is a block diagram showing the configuration of a conventional transmission and reception apparatus provided with an adaptive array antenna.

A conventional adaptive array antenna transmission and reception apparatus assigns weights (modulation) to amplitudes and phases of radio signals transmitted and received through a plurality of antenna elements 501 arranged on a straight line or a circle by causing weighting sections 502 to multiply the radio signals by preset weighting factors (complex weighting factors). Upon transmission, a radio signal is output from a transmission and reception section 504 to a combiner and distributor 503, distributed and output to the plurality of weighting sections 502 and then assigned weights by the weighting sections 502. The weighted radio signals are output to the antenna elements 501 and then transmitted. Upon reception, radio signals received by the respective antenna elements 501 are assigned weights at the weighting sections 502 and output to the combiner and distributor 503. The radio signals output from the plurality of weighting sections 502 and integrated by the combiner and distributor 503, are combined by the combiner and distributor 503, and then output to the transmission and reception section 504 and demodulated.

However, the radio signals weighted by the weighting sections 502 may not always display desired antenna directivities. This phenomenon occurs due to phase differences, in which the weighted radio signals are shifted from expected phases,

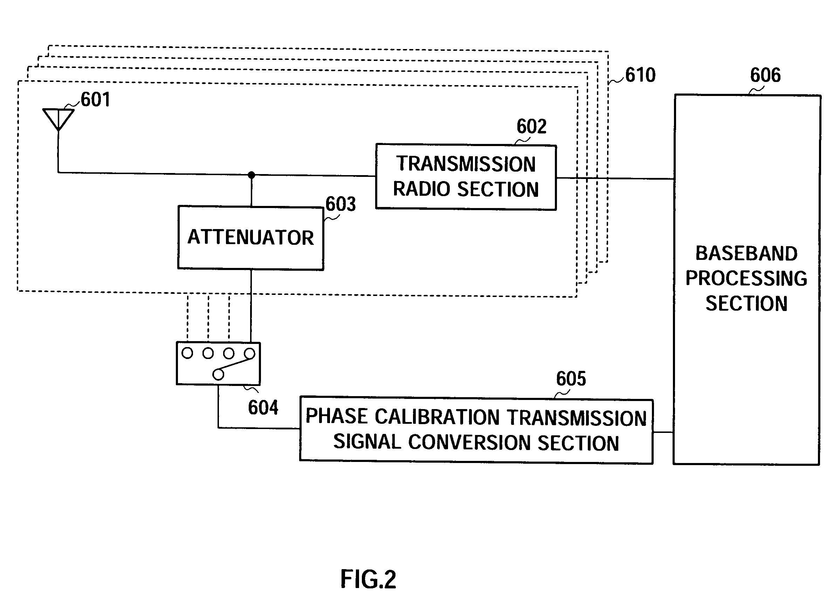

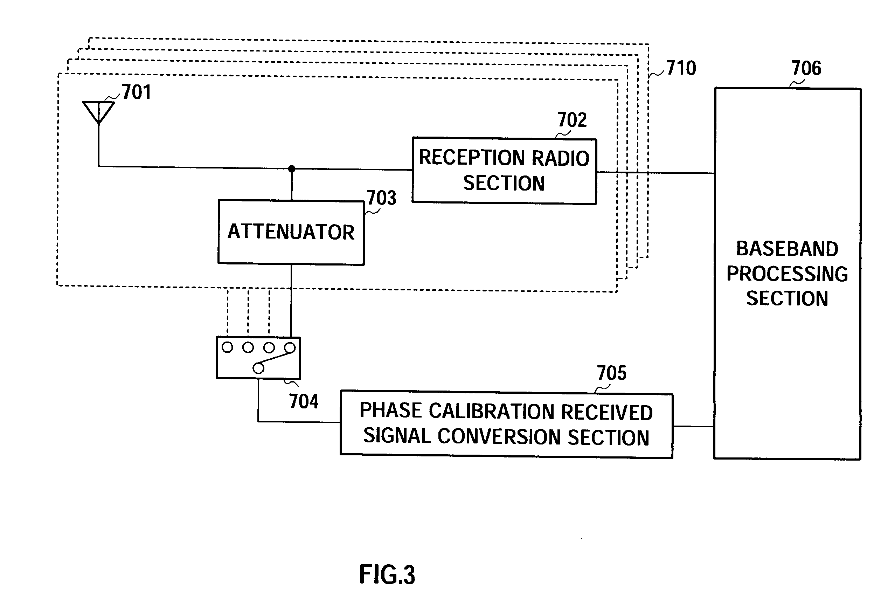

Therefore, it is necessary to calibrate the phase differences generated in the weighting sections 502. As such a calibration section, a section using an array antenna transmission apparatus provided with radio transmission units 610 in the configuration shown in FIG.2 and a section using an array antenna reception apparatus provided with radio reception units 710 in the configuration shown in FIG.3 are known.

FIG.2 shows an array antenna transmission apparatus provided with a plurality of radio transmission units 610 each made up of an antenna element 601, an attenuator 603 and a transmission radio section 602, and further a first selector 604 connected to the plurality of radio transmission units 610, a phase calibration transmission signal conversion section 605 and a baseband processing section 606.

In this array antenna transmission apparatus, the baseband processing section 606 multiplies a transmission baseband signal by a preset weighting factor to generate a transmission baseband signal with directivity and outputs this transmission baseband signal with directivity to the transmission radio section 602. In this array antenna transmission apparatus, the transmission radio section 602 carries out processing such as quadrature modulation, frequency up-conversion and amplification on the transmission baseband signal with directivity and converts the transmission baseband signal with directivity to a radio signal. Then, this array antenna transmission apparatus transmits the radio signal from the antenna elements 601.

Furthermore, this array antenna transmission apparatus extracts the same signal as the radio signal transmitted from the antenna elements 601 as a phase calibration signal and outputs this phase calibration signal to the phase calibration transmission signal conversion section 605 through the attenuator 603. Next, in this array antenna transmission apparatus, the phase calibration transmission signal conversion section 605 carries out processing such as frequency down-conversion and quadrature demodulation on the phase calibration signal to generate a reference baseband signal for phase calibration and outputs this reference baseband signal to the baseband processing section 606. Here, the baseband processing section 606 keeps track of weighting factors of all the radio transmission units 610 and therefore keeps track of phase differences (calculational phase differences) which must be produced among the radio transmission units 610. Therefore, the baseband processing section 606 measures the phases of the reference baseband signal of all the radio transmission units 610, measures phase differences actually produced among the plurality of radio transmission units 610 and calculates the phase difference for each radio transmission unit 610 by subtracting the calculational phase difference from this actual phase difference. Then, the baseband processing section 606 corrects the weighting factor by which the transmission baseband signal is multiplied for each radio transmission unit 610 based on this phase difference and thereby calibrates the phase difference produced in each radio transmission unit 610.

On the other hand, FIG.3 shows an array antenna reception apparatus provided with a plurality of radio reception units 710 each made up of an antenna element 701, an attenuator 703 and a reception radio section 702, and further second selector 704 connected to the plurality of radio reception units 710, a phase calibration received signal conversion section 705 and a baseband processing section 706.

In this array antenna reception apparatus, the reception radio section 702 carries out processing such as amplification, frequency down-conversion and quadrature demodulation on a radio signal received by the antenna element 701 and converts this radio signal to a reception baseband signal. This reception baseband signal is output to the baseband processing section 706.

Furthermore, this array antenna reception apparatus extracts a phase calibration signal from the radio signal before being input to the reception radio section 702 through the attenuator 703 and outputs the extracted phase calibration signal to the phase calibration received signal conversion section 705. Next, in this array antenna reception apparatus, the phase calibration received signal conversion section 705 carries out processing such as frequency down-conversion and quadrature demodulation on the phase calibration signal and generates a reference baseband signal for phase calibration. Next, this reference baseband signal is output to the baseband processing section 706.

The baseband processing section 706 compares the phase of a reception baseband signal output via the reception radio section 702 with the phase of the reference baseband signal for phase calibration output via the phase calibration received signal conversion section 705 and measures phase differences of each radio reception unit 710 produced between these two paths for all the radio reception units 710. The baseband processing section 706 adjusts weighting factors by which the reception baseband signal is multiplied based on the phase differences produced between the two paths measured for all the radio reception units 710 suitably and thereby calibrates phase differences produced at the respective radio reception units 710.

However, the conventional array antenna transmission apparatus and conventional array antenna reception apparatus are apparatuses formed independently of each other, and when these apparatuses are incorporated in a communication terminal apparatus, there is a problem that reductions of the size and weight of the communication terminal apparatus may be hampered. A commercial value of a mobile communication terminal apparatus is increased especially when it is lighter and more compact, therefore when both the conventional array antenna transmission apparatus and the conventional array antenna reception apparatus are incorporated together in a mobile communication terminal apparatus, it is necessary to share components between the conventional array antenna transmission apparatus and the conventional array antenna reception apparatus as much as possible.

Against such a background, an array antenna transmission and reception apparatus using the same antenna elements as the antenna elements 601, 701 has already been developed. In this array antenna transmission and reception apparatus, radio signals to be transmitted and radio signals to be received pass through the same path in the vicinity of the antenna elements, phase calibration signals are extracted from this common path through the attenuators 603, 703, which results in a problem that radio signals received by the antenna elements 701 get mixed in with the phase calibration transmission signal conversion section 605 or radio signals output from the transmission radio section 602 get mixed in with the phase calibration received signal conversion section 705, that is, radio signals to be transmitted and radio signals to be received are mixed up as noise.

### Disclosure of Invention

It is an object of the present invention to provide an array antenna transmission and reception apparatus in a simple configuration, capable of reducing the size and weight and separating and extracting respective phase calibration signals from radio signals to be transmitted and radio signals to be received passing through the same path.

An array antenna transmission and reception apparatus, according to an embodiment of the present invention, comprises a plurality of antenna elements, a baseband processing section that carries out weighting processing corresponding to the respective antenna elements on transmission baseband signals to form transmission baseband signals with directivity and carries out weighting processing corresponding to the respective antenna elements on the reception baseband signals received from the plurality of antenna elements to form reception baseband signals with directivity, a plurality of transmission radio sections provided between the baseband processing section and the plurality of antenna elements that convert the transmission baseband signals with directivity to radio signals, a plurality of reception radio sections provided between the baseband processing section and the plurality of antenna elements that converts the radio signals received from the antenna elements to reception baseband signals, a phase calibration transmission signal conversion section that converts the radio signals output from the plurality of transmission radio sections to reference baseband signals for phase calibration and inputs the reference baseband signals to the baseband processing section, a phase calibration received signal conversion section that converts the radio signals received from the plurality of antenna elements to reference baseband signals for phase calibration and inputs the reference baseband signals to the baseband processing section, a plurality of directivity couplers provided between the antenna elements, the transmission radio section and the reception radio section, a first selection section that selectively supplies any one of the plurality of radio signals from the transmission radio section attenuated and output by the directivity couplers to the phase calibration transmission signal conversion section and a second selection section that selectively supplies any one of the radio signals from the antenna elements attenuated and output by the directivity couplers to the phase calibration received signal conversion section.

In the array antenna transmission and reception apparatus, the directivity coupler preferably comprises a first connection terminal connected to the antenna elements, a second connection terminal connected to the transmission radio section and the reception radio section, a third connection terminal with directivity toward the first connection terminal and connected to the phase calibration received signal conversion section and a fourth connection terminal with directivity toward the second connection terminal and connected to the phase calibration transmission signal conversion section.

The array antenna transmission and reception apparatus preferably comprises a first switch between the phase calibration received signal conversion section and the third connection terminal that connects either the phase calibration received signal conversion section or termination to the third connection terminal and a second switch between the phase calibration transmission signal conversion section and the fourth connection terminal that connects either the phase calibration transmission signal conversion section or termination to the fourth connection terminal.

The array antenna transmission and reception apparatus preferably comprises a first band pass filter between the phase calibration received signal conversion section and the third connection terminal that selects the radio signals received by the antenna elements and allows the radio signals to pass and a second band pass filter between the phase calibration transmission signal conversion section and the fourth connection terminal that selects the radio signals output from the transmission radio section and allows the radio signals to pass.

The array antenna transmission and reception apparatus preferably comprises an antenna duplexer connected to the transmission radio section, the reception radio section and the second connection terminal of the directivity coupler that outputs the radio signals output from the transmission radio section to the second connection terminal and outputs the radio signals output from the second connection terminal to the reception radio section.

### Brief Description of Drawings

FIG.1 is a block diagram showing the configuration of a conventional adaptive array transmission and reception apparatus;
FIG.2 is a block diagram showing the configuration of a conventional array antenna transmission apparatus;
FIG.3 is a block diagram showing the configuration of a conventional array antenna reception apparatus;
FIG.4 is a block diagram showing the configuration of an array antenna transmission and reception apparatus according to Embodiment 1 of the present invention;
FIG.5 illustrates the configuration of a directivity coupler provided for the array antenna transmission and reception apparatus according to the present invention;
FIG.6 is a block diagram showing the configuration of an array antenna transmission and reception apparatus according to Embodiment 2 of the present invention; and
FIG.7 is a block diagram showing the configuration of an array antenna transmission and reception apparatus according to Embodiment 3 of the present invention.

### Best Mode for Carrying out the Invention

An essence of the present invention is to interpose a directivity coupler between an antenna duplexer connected to a transmission radio section and a reception radio section and antenna elements, connect a phase calibration transmission signal conversion section that generates a reference baseband signal used to measure a phase difference which occurs in a transmission radio section to a connection terminal with directivity toward connection terminals connected to an antenna duplexer of the connection terminals of the directivity coupler on one hand and connect a phase calibration received signal conversion section that generates a reference baseband signal used to measure a phase difference produced at the reception radio section to a connection terminal with directivity toward connection terminals connected to the antenna elements on the other. With reference now to the accompanying drawings, embodiments of the present invention will be explained in detail below.

### (Embodiment 1)

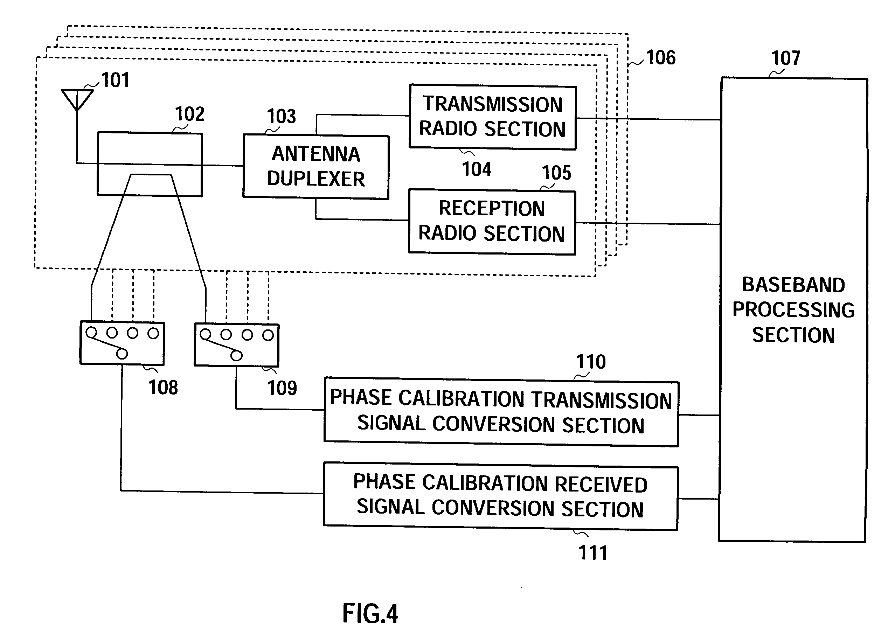

FIG.4 is a block diagram showing the configuration of an array antenna transmission and reception apparatus according to Embodiment 1 of the present invention.

The array antenna transmission and reception apparatus according to this embodiment is provided with a plurality of radio units 106, a first selector 109, a second selector 108, a phase calibration transmission signal conversion section 110, a phase calibration received signal conversion section 111 and a baseband processing section 107. Furthermore, the radio unit 106 is provided with an antenna element 101, a directivity coupler 102, an antenna duplexer 103, a transmission radio section 104 and a reception radio section 105.

The antenna element 101 transmits a radio signal output from the baseband processing section 107 through the transmission radio section 104, antenna duplexer 103 and directivity coupler 102 and receives a radio signal and outputs it to the directivity coupler 102.

The directivity coupler 102 is provided with a first connection terminal 201 connected to the antenna element 101, a second connection terminal 202 connected to the antenna duplexer 103, a third connection terminal 203 with directivity toward the first connection terminal 201 and connected to the phase calibration received signal conversion section 111 and a fourth connection terminal 204 with directivity toward the second connection terminal 202 and connected to the phase calibration transmission signal conversion section 110. The function and operation of the directivity coupler 102 will be described later.

The antenna duplexer 103 is connected to the directivity coupler 102, transmission radio section 104 and reception radio section 105, outputs a radio signal output from the transmission radio section 104 to the directivity coupler 102 and outputs a radio signal output from the directivity coupler 102 to the reception radio section 105. An example of the antenna duplexer 103 is an SPDT (Single-Pole Double-Throw) semiconductor switch for an array antenna transmission and reception apparatus based on a TDD (Time Division Duplex) scheme or a dielectric filter duplexer for an array antenna transmission and reception apparatus based on an FDD (Frequency Division Duplex) scheme. An example of the antenna duplexer provided with both an SPDT semiconductor switch and dielectric filter is a "multilayered antenna switch filter (L series)" manufactured by Panasonic.

The transmission radio section 104 is provided with components (not shown) such as a quadrature modulator, frequency up-converter and power amplifier, and processes a transmission baseband signal with directivity output from the baseband processing section 107 through the respective components and then outputs the result to the antenna duplexer 103.

The reception radio section 105 is provided with components (not shown) such as an LNA (Low Noise Amplifier), frequency down-converter and quadrature demodulator, and processes a radio signal output from the antenna duplexer 103 through the respective components, converts the radio signal to a baseband signal and then outputs the baseband signal to the baseband processing section 107.

The baseband processing section 107 is connected to a plurality of transmission radio sections 104, a plurality of reception radio sections 105, the phase calibration transmission signal conversion section 110 and the phase calibration received signal conversion section 111 The function and operation of the baseband processing section 107 will be described later.

The second selector 108 is constructed of a semiconductor switch such as SPDT or SP8T and connected to the third connection terminal 203 of each directivity coupler 102 of the plurality of radio units 106 and the phase calibration received signal conversion section 111. Furthermore, the second selector 108 changes and selects the radio unit 106 to be connected at preset periods.

Likewise, the first selector 109 is constructed of a semiconductor switch such as SPDT or SP8T and connected to the fourth connection terminal 204 of each directivity coupler 102 of the plurality of radio units 106 and the phase calibration transmission signal conversion section 110. Furthermore, the selector 109 changes and selects the radio unit 106 to be connected at preset periods.

The phase calibration transmission signal conversion section 110 is provided with components (not shown) such as a frequency down-converter and quadrature demodulator, and processes the phase calibration signal output from the first selector 109 through the respective components, converts the phase calibration signal to a reference baseband signal and then outputs the reference baseband signal to the baseband processing section 107.

Likewise, the phase calibration received signal conversion section 111 is provided with components (not shown) such as a frequency down-converter and quadrature demodulator, and processes the phase calibration signal output from the second selector 108 through the respective components, converts the phase calibration signal to a reference baseband signal and then outputs the reference baseband signal to the baseband processing section 107.

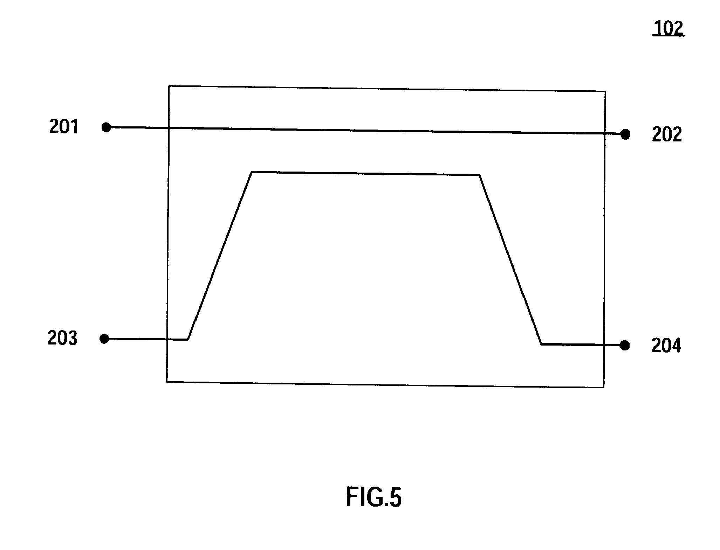

FIG.5 illustrates the configuration of the directivity coupler 102.

The directivity coupler 102 is provided with four connection terminals, the first to fourth terminals: the antenna element 101 is connected to the first connection terminal 201; the antenna duplexer 103 is connected to the second connection terminal 202; the second selector 108 is connected to the third connection terminal 203; and the first selector 109 is connected to the fourth connection terminal 204. Note that the term "being connected" according to the present invention includes not only when the respective components are directly connected but also when the respective components are indirectly connected. That is, for example, the phrase "the transmission radio section 104 and reception radio section 105 are connected to the second connection terminal 202 of the directivity coupler 102" also includes the case where "the transmission radio section 104 and reception radio section 105 are connected to the second connection terminal 202 of the directivity coupler 102 "through the antenna duplexer 103."

The directivity coupler 102 is provided with connection terminals to which radio signals are input and other connection terminals with directivity. The third connection terminal 203 has directivity toward the first connection terminal 201 and the fourth connection terminal 204 has directivity toward the second connection terminal 202. Here, for example, the phrase "with directivity" means that a radio signal input from the first connection terminal 201 is extracted attenuated by 20 dB from the third connection terminal 203 when the directivity coupler 102 has a degree of coupling of 20 dB and insertion loss of 0.5 dB. At this time, a radio signal is output attenuated by 0.5 dB from the second connection terminal 202, but no radio signal can be extracted from the fourth connection terminal 204. Likewise, a radio signal input from the second connection terminal 201 is extracted attenuated by 20 dB from the fourth connection terminal 204 and extracted attenuated by 0.5 dB from the second connection terminal 202, but no radio signal can be extracted from the third connection terminal 203.

The specific configuration of the directivity coupler 102 is not particularly limited, and, for example, it is possible to consider a directivity coupler provided with two coupling holes spaced by 1/4 of wavelength λ of the radio signal between a first path which connects the first connection terminal 201 and the second connection terminal 202, and a second path which connects the third connection terminal 203 and the fourth connection terminal 204. In addition, directivity couplers having a different number of coupling holes or using long slits including, are also known as the directivity coupler 102.

Next, the operation and function of the array antenna transmission and reception apparatus according to this embodiment will be explained.

First, the operation of the apparatus when this array antenna transmission and reception apparatus transmits a radio signal will be explained in detail.

The baseband processing section 107 multiplies the transmission baseband signal by a weighting factor preset for each radio unit 106 whose output destination to thereby generate a transmission baseband signal with directivity with its phase modulated suitably. This transmission baseband signal with directivity is output to the transmission radio section 104, then subjected to quadrature modulation, frequency up-conversion and amplification processing and converted to a radio signal. This radio signal is output to the second connection terminal 202 of the directivity coupler 102 through the antenna duplexer 103.

Next, this radio signal is output attenuated by 0.5 dB from the first connection terminal 201 of the directivity coupler 102. The radio signal output from this first connection terminal 201 is transmitted from the antenna elements 101.

On the other hand, in the directivity coupler 102, this radio signal is attenuated by 20 dB and extracted from the fourth connection terminal 204 as a phase calibration signal and output to the first selector 109.

The first selector 109 selects the directivity coupler 102 connected to the phase calibration transmission signal conversion section 110 from among the plurality of radio units 106 preset at predetermined periods. For this reason, the phase calibration signal is output to the phase calibration transmission signal conversion section 110 at the periods selected by the first selector 109.

Next, the phase calibration signal is subjected to frequency down-conversion and quadrature demodulation processing, etc., at the phase calibration transmission signal conversion section 110 and converted to a reference baseband signal for phase calibration.

This reference baseband signal is immediately output to the baseband processing section 107. The baseband processing section 107 measures the phases of reference baseband signals for all the radio units 106.

The transmission baseband signal with directivity output from the baseband processing section 107 in this way is subjected to various types of processing while passing through the transmission radio section 104, the antenna duplexer 103, the directivity coupler 102, the first selector 109 and the phase calibration transmission signal conversion section 110, and finally returns to the baseband processing section 107 as a reference baseband signal for phase calibration.

The transmission baseband signal with directivity output from the baseband processing section 107 is subjected to the various types of processing, and therefore the phase thereof may be changed unexpectedly due to individual differences of the apparatuses that carry out the various types of processing. If this unexpected phase variation is left as it is, radio signals transmitted from the antenna elements 101 of the plurality of radio units 106 do not interfere as expected, and therefore antenna directivities of the radio signals are lost.

Thus, the baseband processing section 107 measures the phases of the returned reference baseband signals for all the radio units 106, subtracts a phase difference (calculational phase difference) which must be produced for each radio unit 106 based on preset weighting factors from the phase differences which have been actually produced among the radio units 106 which are the measurement results and examines whether any of the plurality of radio units 106 has phase differences or not. When such phase differences are found, the baseband processing section 107 adjusts the weighting factors of the corresponding radio units 106 suitably so as to eliminate the phase differences.

Next, the operation of the apparatus when this array antenna transmission and reception apparatus receives a radio signal will be explained.

The radio signal received by the antenna element 101 is output to the first connection terminal 201 of the directivity coupler 102. This radio signal is output attenuated by 0.5 dB from the second connection terminal 202 in the directivity coupler 102. The radio signal output from this second connection terminal is output to the reception radio section 105 through the antenna duplexer 103.

Next, this radio signal is subjected to processing such as amplification, frequency down-conversion and quadrature demodulation at the reception radio section 105, converted to a reception baseband signal and output to the baseband processing section 107. The baseband processing section 107 measures the phases of reception baseband signals for all the radio units 106.

On the other hand, in the directivity coupler 102, the radio signal output from the antenna element 101 is extracted attenuated by 20 dB from the third connection terminal 203 as a phase calibration signal and output to the second selector 108. The second selector 108 selects the directivity coupler 102 to be connected to the phase calibration received signal conversion section 111 from among a plurality of radio units 106 preset at predetermined periods. For this reason, the phase calibration signal is output to the phase calibration received signal conversion section 111 at periods in which the directivity coupler 102 and the phase calibration received signal conversion section 111 are connected by the second selector 108.

Next, the phase calibration signal is subjected to frequency down-conversion and quadrature demodulation processing at the phase calibration received signal conversion section 111, converted to a reference baseband signal for phase calibration and then output to the baseband processing section 107.

The baseband processing section 107 measures the phases of reception baseband signals for phase calibration for all the radio units 106.

The baseband processing section 107 compares the phase of the reception baseband signal output through the reception radio section 105 with the phase of the reference baseband signal output through the phase calibration received signal conversion section 111 and measures phase differences observed between these two baseband signals for all the radio units 106.

Then, the baseband processing section 107 adjusts a weighting factor by which the reception baseband signal is multiplied relative to the phase of the reference baseband signal for phase calibration suitably, thereby makes the phase of the reception baseband signal tuned to the phase of the reference baseband signal and calibrates the phase difference observed between the two baseband signals.

Thus, according to the array antenna transmission and reception apparatus according to this embodiment, using the antenna duplexer 103 makes it possible to simplify the configuration of the array antenna transmission and reception apparatus and reduce the size and weight thereof because the antenna element 101 and apparatus 603, 703 need not be provided separately for transmission and for reception.

Furthermore, according to this embodiment, the directivity coupler 102 is provided between the antenna element 101 and the transmission radio section 104 and between the antenna element 101 and the reception radio section 105, and therefore it is possible to clearly separate the respective phase calibration signals from the radio signal to be transmitted and radio signal to be received which pass through the same path in the vicinity of the antenna element 101 and extract the phase calibration signals.

Furthermore, according to this embodiment, the antenna duplexer 102 prevents the radio signal to be received from being input to the transmission radio section 104 and prevents the radio signal from being input to the reception radio section 105, and therefore it is possible to effectively reduce the mixing of noise into the baseband processing section 107.

Furthermore, according to the array antenna transmission and reception apparatus of this embodiment, the directivity coupler 102 is interposed between the antenna element 101 and the antenna duplexer 103, a radio signal to be transmitted and a radio signal to be received are input from different connection terminals in the directivity coupler 102 and phase calibration signals are extracted separately from other connection terminals with their respective directivities, and therefore it is possible to accurately measure the phase difference produced between the antenna duplexer 103 and transmission radio section 104 and the phase difference produced between the antenna duplexer 103 and reception radio section 105.

Note that the array antenna transmission and reception apparatus according to this embodiment may be modified or applied as follows.

This embodiment has described the case where an SPDT semiconductor switch or dielectric filter is used as the antenna duplexer 103, but the present invention is not limited to this case, and, for example, instead of using the antenna duplexer 103, the transmission radio section 104 and reception radio section 105 of an array antenna transmission and reception apparatus based on an FDD scheme can be each provided with a band pass filter which allows radio signals of different frequencies to pass, while the transmission radio section 104 and reception radio section 105 of an array antenna transmission and reception apparatus based on a TDD scheme can also be each provided with a switch which automatically discriminates between transmission and reception and connects each radio section to the directivity coupler 102.

Note that the array antenna transmission and reception apparatus according to the present invention includes an adaptive array antenna transmission and reception apparatus.

### (Embodiment 2)

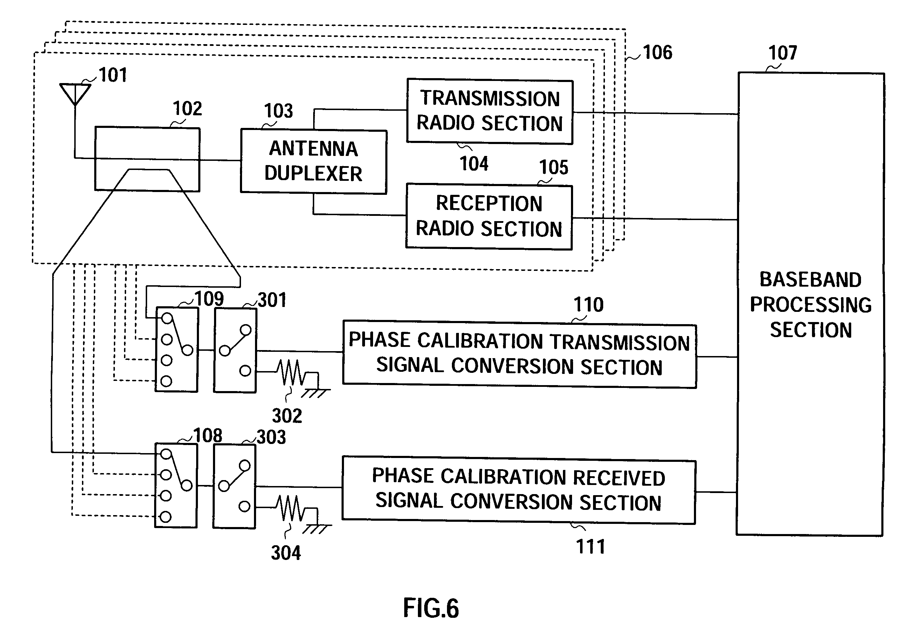

FIG.6 is a block diagram showing the configuration of an array antenna transmission and reception apparatus according to Embodiment 2 of the present invention.

Hereinafter, the array antenna transmission and reception apparatus according to this embodiment will be explained with reference to the drawings accordingly, but components having the same functions as those of the components shown in Embodiment 1 are assigned the same reference numerals and explanations thereof will be omitted.

The array antenna transmission and reception apparatus according to this embodiment corresponds to the array antenna transmission and reception apparatus according to Embodiment 1 provided with a second switch 301 between a first selector 109 and a phase calibration transmission signal conversion section 110, and a first switch 303 between a second selector 108 and a phase calibration received signal conversion section 111.

The second switch 301 is an SPDT switch which selectively connects either the phase calibration transmission signal conversion section 110 or a resistor termination 302 to the first selector 109.

Furthermore, the first switch 303 is also an SPDT switch which selectively connects either the phase calibration received signal conversion section 111 or a resistor termination 304 to the second selector 108.

The array antenna transmission and reception apparatus according to this embodiment is appropriate for communications based on a TDD scheme. In TDD scheme communications, carriers of the same frequency are used for radio signals to be transmitted and radio signals to be received, and transmission and reception are carried out alternately in terms of time.

Thus, during transmission, the second switch 301 connects the first selector 109 to the phase calibration transmission signal conversion section 110 so that the phase calibration signal is output to the phase calibration transmission signal conversion section 110. At this time, the first switch 303 connects the second selector 108 to the resistor termination 304 so that the phase calibration signal is not output from the second selector 108 to the phase calibration received signal conversion section 111.

Furthermore, during reception, the second switch 301 connects the first selector 109 to the resistor termination 302 so that the phase calibration signal is not output to the phase calibration transmission signal conversion section 110. At this time, the first switch 303 connects the second selector 108 to the phase calibration received signal conversion section 111 so that the phase calibration signal is output from the second selector 108 to the phase calibration received signal conversion section 111.

Thus, according to the array antenna transmission and reception apparatus of this embodiment, since the second switch 301 or first switch 303 is automatically connected to the resistor termination 312 and 314 during transmission or reception of a radio signal, it is possible to effectively inhibit the mixing of noise into the phase calibration transmission signal conversion section 110 or phase calibration received signal conversion section 111.

Therefore, the array antenna transmission and reception apparatus according to this embodiment can improve isolation between the phase calibration transmission signal conversion section 110 and the phase calibration received signal conversion section 111.

### (Embodiment 3)

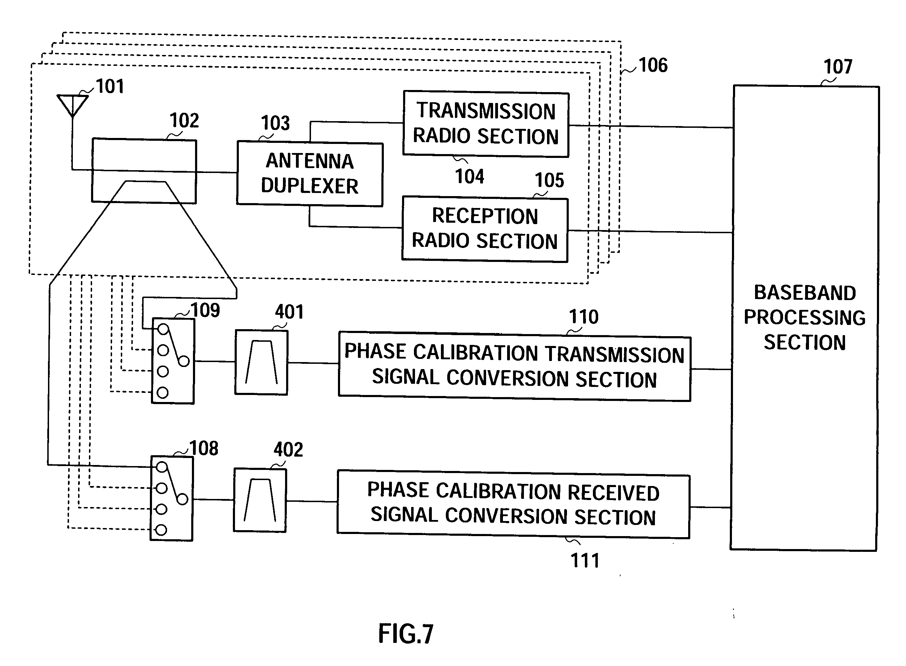

FIG.7 is a block diagram showing the configuration of an array antenna transmission and reception apparatus according to Embodiment 3 of the present invention.

Hereinafter, the array antenna transmission and reception apparatus according to this embodiment will be explained with reference to the drawings accordingly, but components having the same functions as those of the components shown in Embodiment 1 are assigned the same reference numerals and explanations thereof will be omitted.

The array antenna transmission and reception apparatus according to this embodiment corresponds to the array antenna transmission and reception apparatus according to Embodiment 1 provided with a second band pass filter 401 between a first selector 109 and a phase calibration transmission signal conversion section 110, and a first band pass filter 402 between a second selector 108 and a phase calibration received signal conversion section 111.

The array antenna transmission and reception apparatus according to this embodiment is suitable for FDD scheme communications. In FDD scheme communications, carriers of different frequencies are used for radio signals to be transmitted and radio signals to be received. For this reason, the antenna duplexer 103 is preferably provided with a dielectric filter.

The second band pass filter 401 selects a frequency that can be extracted suitably so that the phase calibration signal leaked from the directivity coupler 102 deriving from the radio signal to be received is intercepted and only the phase calibration signal deriving from the radio signal to be transmitted is selectively allowed to pass.

Likewise, the first band pass filter 402 also selects a frequency that can be extracted suitably so that the phase calibration signal leaked from the directivity coupler 102 deriving from the radio signal to be transmitted is intercepted and only the phase calibration signal deriving from the radio signal to be received is selectively allowed to pass.

Thus, according to the array antenna transmission and reception apparatus of this embodiment, the second band pass filter 401 and first band pass filter 402 intercept the passage of radio signals other than those of preset frequencies in FDD scheme communications, and therefore it is possible to effectively inhibit the mixing of noise into the phase calibration transmission signal conversion section 110 and phase calibration received signal conversion section 111.

Therefore, according to the array antenna transmission and reception apparatus of this embodiment, it is possible to improve isolation between the phase calibration transmission signal conversion section 110 and phase calibration received signal conversion section 111, and reduce variations in the amount of output attenuation and phase variations of the phase calibration transmission signal conversion section 110 and phase calibration received signal conversion section 111 deriving from deterioration of isolation.

This application is based on Japanese Patent Application No.2003-110640 filed on April 15, 2003, entire content of which is expressly incorporated by reference herein.

### Industrial Applicability

The present invention is suitable for use in base station apparatuses and equivalent in a mobile communication system.

## Claims

1. An array antenna transmission and reception apparatus comprising:
a plurality of antenna elements;
a baseband processing section that carries out weighting processing corresponding to said respective antenna elements on transmission baseband signals to form transmission baseband signals with directivity and carries out weighting processing corresponding to said respective antenna elements on the reception baseband signals received from said plurality of antenna elements to form reception baseband signals with directivity;
a plurality of transmission radio sections provided between said baseband processing section and said plurality of antenna elements that convert said transmission baseband signals with directivity to radio signals;
a plurality of reception radio sections provided between said baseband processing section and said plurality of antenna elements that convert the radio signals received from said antenna elements to reception baseband signals;
a phase calibration transmission signal conversion section that converts said radio signals output from said plurality of transmission radio sections to reference baseband signals for phase calibration and inputs said reference baseband signals to said baseband processing section;
a phase calibration received signal conversion section that converts said radio signals received from said plurality of antenna elements to reference baseband signals for phase calibration and inputs said reference baseband signals to said baseband processing section;
a plurality of directivity couplers provided between said antenna elements and said transmission radio section and between said antenna elements said reception radio section;
a first selection section that selectively supplies one of said plurality of radio signals from said transmission radio section attenuated and output by said directivity couplers to said phase calibration transmission signal conversion section; and
a second selection section that selectively supplies one of said radio signals from said antenna elements attenuated and output by said directivity couplers to said phase calibration received signal conversion section.

2. The array antenna transmission and reception apparatus according to claim 1, wherein said directivity coupler comprises:
a first connection terminal connected to said antenna elements;
a second connection terminal connected to said transmission radio section and said reception radio section;
a third connection terminal with directivity toward said first connection terminal and connected to said phase calibration received signal conversion section; and
a fourth connection terminal with directivity toward said second connection terminal and connected to said phase calibration transmission signal conversion section.

3. The array antenna transmission and reception apparatus according to claim 2, further comprising:
a first switch between said phase calibration received signal conversion section and said third connection terminal that connects either said phase calibration received signal conversion section or termination to said third connection terminal; and
a second switch between said phase calibration transmission signal conversion section and said fourth connection terminal that connects one of said phase calibration transmission signal conversion section and termination to said fourth connection terminal.

4. The array antenna transmission and reception apparatus according to claim 2, further comprising:
a first band pass filter between said phase calibration received signal conversion section and said third connection terminal that selects said radio signals received by said antenna elements and allows said radio signals to pass; and
a second band pass filter between said phase calibration transmission signal conversion section and said fourth connection terminal that selects said radio signals output from said transmission radio section and allows said radio signals to pass.

5. The array antenna transmission and reception apparatus according to claims 2, further comprising an antenna duplexer connected to said transmission radio section, said reception radio section and said second connection terminal of said directivity coupler that outputs said radio signals output from said transmission radio section to said second connection terminal and outputs said radio signals output from said second connection terminal to said reception radio section.
